# EUROPEAN PATENT APPLICATION

(11) **EP 2 298 695 A1**
(43) Date of publication of application: **23.03.2011**
(21) Application number: 09754618.8
(22) Date of filing: 21.05.2009
(51) Int. Cl.: C01B 13/32, B29C 41/12, C01B 33/12, B29L 7/00

(54) **FLAKY MATERIAL AND PROCESS FOR PRODUCING THE FLAKY MATERIAL**

(30) Priority: 27.05.2008 JP 2008137896; 13.03.2009 JP 2009060388; 14.05.2009 JP 2009117186
(71) Applicant: Central Glass Company, Limited, Yamaguchi 755-0001 (JP)
(72) Inventor: OUGITANI, Yukihiro, Matsusaka-shi, Mie 515-0001 (JP); NAKAI, Nobuyuki, Matsusaka-shi, Mie 515-0001 (JP); FUJIURA, Norikazu, Matsusaka-shi, Mie 515-0001 (JP); KIDA, Takahisa, Matsusaka-shi, Mie 515-0001 (JP)
(74) Representative: Manitz, Finsterwald & Partner GbR
(86) International application number: PCT/JP2009/059365
(87) International publication number: WO 2009/145110

(57) **Abstract**

Disclosed is a flaky material formed of an aggregate of fine particles. The aggregate is formed by uniting fine particles to one another. The fine particles are derived from fine particles of an inorganic oxide dispersed in a solvent having an effective (OH⁻) content of 3 x 10⁻⁵ to 1 x 10⁻⁶ mol/l. The surface of the flaky material has a flatness degree equal to or lower than 0.5 µm. The flaky material can provide viewers with a high brightness feeling.

## Description

### Technical Field:

The present invention relates to a flaky material that is contained, in the form of particles, in paints, inks, cosmetics, plastics, films and the like, and a process for producing the flaky material.

### Background Art:

For producing a flaky material, a process is known that comprises applying a sol of metallic compound onto a base member, drying the sol to produce a film-like material, removing the film-like material from the base member, and firing the removed film-like material. For example, in the after-mentioned Patent Documents 1 to 4, there are disclosed methods for producing flaky materials from acid colloidal solution or alkaline colloidal solution. As examples of the colloidal solution, the Documents show a silica sol of pH 9.8, a silica sol of pH 2 to 4, and an alumina sol of pH 2.5 to 4.5.

The flaky material controlled to have a suitable size is contained, in the form of particles, in various things, such as paints, inks, cosmetics, plastics, films and the like. Since the flaky material thus produced has a flat surface, any light reflecting on the flat surface causes the thing, which has the particles of the flaky material dispersed therein, to provide viewers with unique brilliant (or ablaze) feeling.

In order to control the brilliant feeling in accordance with various uses, the flat surface of the flaky material is coated with a different material. For example, it is said that the paint that contains the flaky material of which surface is coated with a metal, such as, nickel-alloy, iron-alloy or the like is able to form a paintwork that provides the viewers with a high brilliant feeling. (see Patent documents 5 and 6).

### Prior Art Documents:

### Patent Documents:

Patent Document 1 ... Japanese Laid-open Patent Application (Tokkaisho) 62-213833
Patent Document 2 ... Japanese Laid-open Patent Application (Tokkaisho) 62-237936
Patent Document 3 ... Japanese Laid-open Patent Application (Tokkaisho) 62-247834
Patent Document 4 ... Japanese Laid-open Patent Application (Tokkai) 2004-26614
Patent Document 5 ... Japanese Laid-open Patent Application (Tokkaihei) 5-1248
Patent Document 6 ... Japanese Laid-open Patent Application (Tokkaihei) 5-179174

### Summary of Invention:

The brilliant feeling given by the outer surface of the flaky material is affected by not only the type of material of a layer (or covering layer) that is coated on the flaky material but also the shape that is possessed by the outer surface of the covering layer. In order to provide a higher brilliant feeling, it is preferable that the surface on which the light reflects has a high flatness. The flatness of the outer surface of the covering layer is affected by the flatness of the outer surface of a base member onto which the material of the covering layer is applied. The present invention aims to provide a flaky material that can easily provide the outer surface of the covering layer with a higher flatness.

The flaky material according to the present invention is a flaky material formed of an aggregate of fine particles, in which the aggregate is formed by uniting the fine particles to one another, the fine particles are derived from fine particles of an inorganic oxide dispersed in a solvent having an effective (OH⁻) content of 3 x 10⁻⁵ to 1 x 10⁻⁶ mol/l and the outer surface of the flaky material has a flatness that is equal to or smaller than 0.5 µm.

In order to facilitate formation of a flat surface of a covering layer at the time when the outer surface of the flaky material is coated with the material of the covering layer, the present invention provides the outer surface of the flaky material with a flatness of 0.5 µ m, preferably a flatness equal to or smaller than 0.4 µm, more preferably a flatness equal to or smaller than 0.2 µm. If the flatness is larger than 0.5 µm, projections/depressions on the outer surface of the flaky material cause formation of projections/depressions on the surface of a covering layer when the material of the covering layer, such as metal or the like, is coated on the flaky material, which prevents the coated flaky material from providing viewers with a high level of light brightness.

Since good flatness is desirable, it is preferable that the flatness degree is low. However, when a material of the covering layer is coated on the outer surface of the flaky material, the lower limit of the flatness degree may be 0.05 µ m, considering increase in adherence of the coating material to the flaky material due to anchor effect. In the present invention, the flatness degree was measured by using a scanning electron microscope (SEM). That is, for the measurement, a scale bar of 10 µ m was put horizontally beside the flaky material at a sectioned portion of the flaky material, and the maximum distance between the top of a projection on the outer surface and the depth of a depression on the outer surface was measured with the aid of the scale bar.

Since the surface energy increases as the size of the fine particles reduces, aggregation of the fine particles is easily made in case of fine particles. The present invention is provided by practically using such property and a flaky material of the invention is produced by tightly uniting aggregated fine particles. In order to effectively use the property, it is preferable that the fine particles have each a spherical shape.

By using, as the fine particles, fine particles of an inorganic oxide dispersed in a solvent having an effective (OH⁻) content of 3 x 10⁻⁵ to 1 x 10⁻⁶ mol/l, we unexpectedly found that the outer surface of a flaky material thus produced shows a high flatness and thus we established the present invention. In the following description, a solution that includes a solvent serving as a dispersion medium and fine particles of an inorganic oxide dispersed therein is called as a colloidal solution.

The effective (OH⁻) content can be regarded as a component that provides the solution with alkalinity and obtained when hydroxide of alkali metal, hydroxide of alkali-earth metal, hydroxide of ammonia or the like is subjected to a dissociation in a solution.

Each of the fine particles of the inorganic oxide has on the outer surface thereof hydroxyls (OH). With the effective (OH⁻) content of 3 x 10⁻⁵ to 1 x 10⁻⁶ mol/l, preferably of 2 x 10⁻⁵ to 2 x 10⁻⁶ mol/l and more preferably of 1 x 10⁻⁵ to 1 x 10⁻⁶ mol/l, the hydroxyls (OH) and the effective (OH⁻) content are applied to the outer surface of each of the fine particles of inorganic oxide, so that partial and/or unique aggregation of the fine particles is lowered. We considered that the lowering in aggregation of the fine particles brings about the improved flatness of the outer surface of the flaky material.

When the effective (OH⁻) content is smaller than 1 x 10⁻⁶ mol/l, the partial and/or unique aggregation (for example, linear aggregation) of the fine particles is easily made, so that the flatness on the outer surface of the flaky material becomes poor (that is, the flatness degree of the outer surface tends to have a higher value). While, when the effective (OH⁻) content is larger than 3 x 10⁻⁵ mol/l, the fine particles of inorganic oxide dispersed in the colloidal solution are easily aggregated, and thus, the fine particles thus aggregated are easily deposited.

It is preferable that the fine particles are formed of SiO₂, Titania or compound oxide of Silica and Titania. Each of the fine particles formed of SiO₂, Titania or compound oxide of Silica and Titania easily takes a spherical shape, and thus the outer surface of the flaky material that is provided by the aggregation of the fine particles tends to have a good flatness. Furthermore, when the effective (OH⁻) content is in the level of 3 x 10⁻⁵ to 1 x 10⁻⁶ mol/l, the fine particles are partially dissolved, and thus, on the outer surface of the flaky material, dissolution and re-deposition take place thereby causing the outer surface of the flaky material to have an excellent flatness. Furthermore, since the dissolution and re-deposition take place at a contact point between adjacent fine particles, bonding between the particles is strengthened and thus the stiffness of the flaky material is increased. The colloidal solution containing therein fine particles of SiO₂ exhibits an excellent preservation stability, and thus, the colloidal solution is suitable for producing the flaky material. Furthermore, the flaky material produced by using the colloidal solution that contains the fine particles of Titania or compound oxide of Silica and Titania has a high refractive index, and thus the flaky material thus produced can give a much higher level of light brightness to the viewers.

Preferably, the mean diameter of the fine particles is 3 to 100nm, more preferably, the mean diameter is 3 to 50nm. It is to be noted that the mean diameter used in the present invention is the mean diameter of the fine particles that constitute the flaky material, and the mean diameter is defined by the Japanese Industrial Standard of JIS H7808.

It is preferable that the thickness of the flaky material is 0.1 to 5 µm. More preferably, the thickness is 0.2 to 2 µm. If the thickness is larger than 5 µm, the flaky material is easily cracked. While, if the thickness is smaller than 0.1 µm, the fragility of the flaky material increases. It is preferable that the major surfaces (viz., surface portions other than edges) of the flaky material are generally parallel to each other.

In the present invention, it is preferable that a metal is coated on the outer surface of the flaky material of which flatness degree is equal to or lower than 0.5 µm.

### BRIEF DESCIPTION OF THE DRAWING:

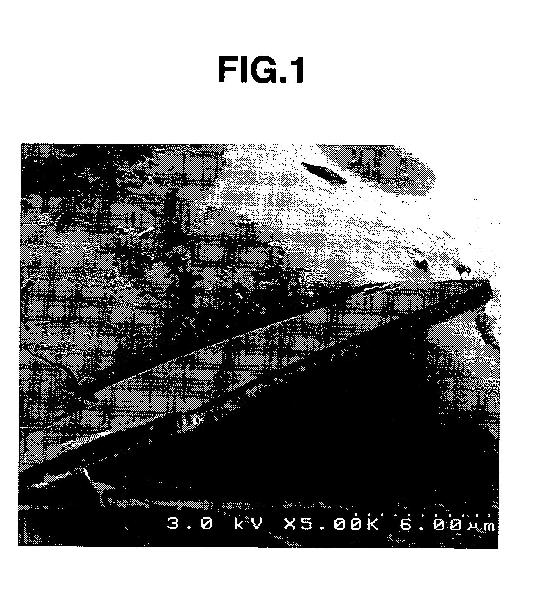

Fig. 1 is a photograph of a flaky material taken by a scanning electron microscope.

### DETAILED DESCRIPTION OF THE INVENTION:

The flaky material according to the present invention exhibits an excellent flatness of an outer surface thereof. Thus, by any light that reflects on the outer surface, a substance (or thing) having therein dispersed fine particles of the flaky material is able to give unique ablaze (or light brightness) feeling to viewers. The flaky material is an aggregation of fine particles produced by aggregating the fine particles, so that the flaky material is easily cut at an interface between the particles, and thus, it is easy to provide the users with a flaky material whose size is suitably controlled.

The flaky material of the present invention is an aggregation of fine particles, and the aggregation is provided by uniting the fine particles and the fine particles are provided by practically using fine particles of an inorganic oxide dispersed in a solvent having an effective (OH⁻) content of 3 x 10⁻⁵ to 1 x 10⁻⁶ mol/l. Preferably, the flaky material is produced by practically using a colloidal solution in which fine particles of inorganic oxide (mean diameter of the fine particles is preferably 3 to 50nm) are dispersed.

As the above-mentioned fine particles of inorganic oxide, fine particles of a type that has on an outer surface hydroxyls (OH) are suitable. Particles of SiO₂, particles of Al₂O₃, particles of ZrO₂, particles of TiO₂, particles of ZnO₂, particles of SnO₂ and the like are enumerated as examples of the above-mentioned fine particles.

It is preferable that the concentration of the fine particles of inorganic oxide in the colloidal solution is equal to or lower than 50 mass%. If the concentration is higher than 50 mass%, rapid increase in viscosity of the colloidal solution and gelation of the solution tend to occur. Preferably, the concentration is equal to or higher than 1 mass%, more preferably, the concentration is 2 to 40 mass%, and much more preferably, the concentration is 5 to 20 mass%.

As a suitable dispersion medium for the fine particles of inorganic oxide, that is, as a suitable solvent for the colloidal solution, there are enumerated various polar solvents which are alcohols, such as methanol, ethanol, propanol and the like, ketones, such as acetone, methyl-ethyl-ketone and the like, esters, such as ethyl acetate, butyl acetate and the like, glycols such as ethylene glycol, propylene glycol and the like, acetonitrile, and water. Among them, water is the best because the effective (OH⁻) content concentration can be easily controlled. Polar solvents are suitable because they have an affinity for the fine particles of inorganic oxide.

For producing the flaky material, the colloidal solution is applied to or coated onto a base member to produce a thin liquid layer on the base member, and then the thin liquid layer is heated to tightly unite the fine particles thereby to produce the flaky material. Since the thin liquid layer shows a shrinkage when heated, application of the colloidal solution onto the base member is so made that the thickness of the thin liquid layer is controlled to cause the produced flaky material to have a thickness of 0.1 to 5 µm.

The above-mentioned base member needs only such features that it has a flat surface and is formed of a material that has a sufficient resistance against the heating temperature. The base member may be rigid in construction or flexible like a film. More specifically, as the base member, various members are usable which are a plate glass commonly used in automobiles, buildings, industrial goods and the like, a metallic base member, such as, stainless steel, aluminum plate, nickel plate and the like, and a plastic base member or plastic film formed of polyethylene-terephthalate, polyethylene, polycarbonate, fuloroplastic, vinyl chloride and the like.

Furthermore, as the means for coating the colloidal solution onto the base member, common coating methods are usable which are spin coating method, dip coating method, flow coating method, roll coating method, spray coating method, screen printing method, flexographic printing method and the like. Once the coating of the colloidal solution onto the base member
is finished, the solution coated base member is left at a room temperature of about 20°C or subjected to a temperature increase in which the temperature is gradually increased to the level of 800°C. With this process, there is produced a thin covering layer on the base member. During the heating, the thin covering layer is contracted and thus part of the thin covering layer peels off from the base member. In order to promote the peeling off phenomenon of the thin covering layer for obtaining the flaky material, various ways are usable which are, for example, peeling work with the aid of brush, cloth, scraper or the like. If desired, for such peeling off work, vibration may be applied to the base member and peeled pieces of the thin layer (viz., flaky material) may be collected with the aid of vacuum system. It is preferable that the flaky material peeled off from the base member is heated again to strength the connection between the fine particles. For this heating, the flaky material is heated at 300°C to 1200°C for 5 minutes to 3 hours.

The outer surface of the flaky material thus produced can be coated with a metal using the flaky material as a base member. As a metal that coats the flaky material, various metals are usable which are silver, gold, cupper, platinum, nickel, cobalt, chrome are the like. Among them, silver is the best because it gives the highest reflectance to light. For carrying out the metal coating, any method can be used as long as it provides a satisfied result. For example, spattering method, sol-gel method and CVD (Chemical-Vapor- Deposition) method may be used. Furthermore, electroless plating method may be used. In this method, the flaky material is dipped in a solution containing a metal that is to be extracted, and then, a reducing agent is fed to the solution to mix together causing the outer surface of the flaky material to be plated with the extracted metal.

As a surfactant that is to be added to the colloidal solution, known anionic surfactant and nonionic surfactant can be used.

### EMBODIMENTS

In the following, the present invention will be described in detail with the aid of embodiments. Flaky materials obtained through the embodiments and flaky materials obtained through comparative examples were subjected to a quality rating by employing the following methods.

[Evaluation on flatness] : The flatness degree of each flaky material was measured by using a scanning electron microscope (S-4500: produced by Hitachi Ltd.). For the measurement, a scale bar of 10 µm was put horizontally beside the flaky material at a sectioned portion of the flaky material, and the maximum distance between the top of a projection formed on the outer surface of the flaky material and the depth of a depression formed on the outer surface was measured. This measurement was carried out at randomly selected ten spots and the results were averaged to get a mean value as a mean flatness degree. The flaky material having the mean flatness degree equal to or smaller than 0.5 µm was evaluated as an acceptable one.

[Evaluation on thickness] : With the scanning electron microscope (S-4500: produced by Hitachi Ltd.) set to have the magnification of 5000X, ten sectioned portions of the flaky material were measured, and the results were averaged to get a mean value as a mean thickness.

### Embodiment-1:

A colloidal solution was produced by using a silica sol that includes fine particles of SiO₂. That is, a silica sol (SNOW-TEX-N (Trade Name), grain size=13nm, pH=9.5, manufactured by NISSAN CHEMICAL INDUSTRIES, LTD.) was put in water to produce a colloidal solution (viz., coating liquid) that contains silica sol by 10%. It was found that the concentration of the effective (OH⁻) content in the colloidal solution is 1.6 x 10⁻⁵ mol/l.

For producing a base member onto which the coating liquid is applied, a float glass having the size of 200mm x 200mm x 5mm (thickness) was prepared. The outer surface of the float glass was polished by using a polishing liquid (Glass polishing agent MIREK A(T) (Trade Name), manufactured by MITSUI MINING & SMELTING CO., LTD.), and then, by using a glass cleaning equipment, the polished float glass was cleaned with water and then dried. Then, the above-mentioned coating liquid was coated onto the polished surface of the glass base member by the spin coating method.

That is, first, the above-mentioned polished glass base member was placed on a rotating table of the spin coating equipment, and about 20ml of the coating liquid was dropped onto the polished outer surface of the glass base member while rotating the rotating table at a speed of 700rmp, and after completion of dropping of the coating liquid, the rotation of the rotating table was kept for 15 seconds. With this, a layer of the coating liquid (or think liquid layer) was formed on the polished outer surface of the glass base member. Then, the layer was heated at 100°C for 10 minutes to form a dried layer. During this heating process, the dried layer was contracted causing production of a dried thin film with cracks. After cooling, the cracked thin film was peeled off from the glass base member by using a brush. With this, fine pieces of the thin film were produced. Then, the fine pieces were heated at 600°C for 30 minutes. With this, the flaky material was obtained.

The flaky material thus produced by the above-mentioned process had a thickness of 1 µm. The flatness degree of the outer surface of the flaky material was 0.2 µm. Fig. 1 shows the observation result, that is, a photograph of the flaky material magnified by the scanning electron microscope. In the photograph, the object that extends from a middle part of a right side to a lower part of a left side is the flaky material that was produced. From the observation result by the microscope, it was found that the outer surface of the flaky material has a high flatness.

### Embodiment-2:

By using the same process as the above-mentioned Embodiment-1 except for using a different silica sol (SNOW-TEX-C (Trade Name), grain size=13nm, pH=8.7, manufactured by NISSAN CHEMICAL INDUSTRIES, LTD.), a flaky material was produced of which thickness was 1.2 µm and flatness degree was 0.3 µm. The concentration of the effective (OH⁻) content in the colloidal solution was 2.5 x 10⁻⁶ mol/l.

### Embodiment-3:

By using the same process as the above-mentioned Embodiment-1 except for using a different colloidal solution that was produced by adding, to the colloidal solution of Embodiment-1, 0.2 wt% of polyether-denatured polydimethylsiloxane of nonionic surfactant (BYK-333 (Trade Name), manufactured by BIGCHEMI JAPAN), a flaky material was produced of which thickness was 0.6 µm and flatness degree was 0.1 µm. The concentration of the effective (OH⁻) content in the colloidal solution was 1.6 x 10⁻⁶ mol/l.

### Embodiment-4:

The colloidal solution was produced by using a liquid agent that includes fine particles of Titania. That is, the liquid agent including the fine particles of Titania (TKC-304 (Trade Name), grain size=6nm, pH=8, manufactured by TAYCA CORPORATION) was put in water to produce a colloidal solution (viz., coating liquid) that contains fine particles of Titania by 8%. It was found that the concentration of the effective (OH⁻) content in the colloidal solution is 1.0 x 10⁻⁶ mol/l.

For producing a base member onto which the coating liquid is coated, a float glass having the size of 200mm x 200mm x 5mm (thickness) was prepared. The outer surface of the float glass was polished by using the polishing liquid (Glass polishing agent MIREK A(T) (Trade Name), manufactured by MITSUI MINING & SMELTING CO., LTD.), and then, by using the glass cleaning equipment, the polished float glass was cleaned with water and then dried. Then, the above-mentioned coating liquid was coated onto the polished surface of the glass base member by the spin coating method.

That is, first, the above-mentioned polished glass base member was placed on the rotating table of the spin coating equipment, and about 20ml of the coating liquid was dropped onto the polished outer surface of the glass base member while rotating the rotating table at a speed of 700rpm, and thereafter the rotation of the rotating table was continued for 15 seconds. With this, a layer of the coating liquid (or thin liquid layer) was formed on the polished outer surface of the glass base member. Then, the layer was heated at 100°C for 10 minutes. With this heating process, the layer thus dried was contacted causing production of a dried thin film with cracks. After cooling, the cracked thin film was peeled off from the glass base member by using the brush. With this, fine pieces of the thin film were produced, and then the fine pieces were heated at 600°C for 30 minutes. With this, the flaky material was obtained.

The flaky material thus produced by the above-mentioned process had a thickness of 1.1 µm. The flatness degree of the outer surface of the flaky material was 0.4 µm. From the observation result by the microscope, it was found that the outer surface of the flaky material has a high flatness.

### Embodiment-5:

By using the same process as the above-mentioned Embodiment-4 except for using a different liquid agent that includes fine particles of compound oxide of Silica and Titania (QUEEN TITANIC (Trade Name), grain size=8nm, pH=8.5, manufactured by JGC Catalysts & Chemicals, Ltd.), a flaky material was produced of which thickness was 0.8 µ m and flatness degree was 0.3 µm. The concentration of the effective (OH⁻) content in the colloidal solution was 1.0 x 10⁻⁵ mol/l.

### Comparative Example-1:

By using the same process as the above-mentioned Embodiment-1 except for using an acid colloidal solution including a silica sol (SNOW-TEX-O (Trade Name), grain size=14nm, pH=2.6, manufactured by NISSAN CHEMICAL INDUSTRIES, LTD.), a flaky material was produced of which thickness was 1.3 µm. The flatness degree of the flaky material was 0.8 µm. The concentration of the effective (OH⁻) content in the colloidal solution was 7.9 x 10⁻¹² mol/l.

### Comparative Example-2:

A colloidal solution was produced by using a silica sol (SNOW-TEX-40 (Trade Name), grain size=15nm, pH=10.1, manufactured by NISSAN CHEMICAL INDUSTRIES, LTD.) that has a high effective (OH⁻) content. That is, the silica sol was put in water to produce a coating liquid (viz., colloidal solution) that contains 30% of silica sol. The method of applying the coating liquid to the glass base member was the same as the above-mentioned Embodiment-1 except that in the comparative example-2, the rotation speed of the rotating table of the spin coating equipment was 1400rpm. With such method, a flaky material was obtained of which thickness was 0.9 µm. On the outer surface of the flaky material thus obtained, there was a precipitation of partial aggregation of fine particles, and the flatness degree of the outer surface was 0.7 µm. The concentration of the effective (OH⁻) content in the colloidal solution was 1.0 x 10⁻⁴ mol/l.

### Comparative Example-3:

A colloidal solution was produced by using a silica sol (SNOW-TEX-N (Trade Name), pH=9.5). That is, the silica sol was put in water and sodium hydroxide was added to the water for the purpose of producing a coating liquid (viz., colloidal solution) that contains the effective (OH⁻) content by 3.2 x 10⁻³ mol/l. However, in this case, the colloidal solution was gelled, and with passage of time, the fine particles of SiO₂ were completely dissolved, causing the colloidal solution to become liquid glass (viz., sodium silicate). Thus, it was impossible to produce a flaky material.

### Comparative Example-4:

As a liquid agent that contains fine particles of Titania, TKC-303 (Trade Name) (grain size=6nm, pH=3, manufactured by TAYCA CORPORATION) was used. The liquid agent was put into water to produce a coating liquid (viz., colloidal solution) that contains the fine particles of Titania by 8%. Application of the coating liquid was made through the same application method as in the above-mentioned Embodiment 4. However, in this Comparative Example-4, there was produced a coagulate that has fine particles partially aggregated, and it was impossible to produce a flaky material. The effective (OH⁻) content concentration in the colloidal solution was 1.0 x 10⁻¹² mol/l.

## Claims

1. A flaky material which is **characterized by** being formed of an aggregate of fine particles, the aggregate being formed by uniting the fine particles to one another, the fine particles being derived from fine particles of an inorganic oxide dispersed in a solvent having an effective (OH⁻) content of 3 x 10⁻⁵ to 1 x 10⁻⁶ mol/l and the surface of the flaky material having a flatness that is equal to or smaller than 0.5 µm.

2. A flaky material as claimed in Claim 1, which is further **characterized in that** the fine particles are formed of SiO₂, Titania, or compound oxide of Silica and Titania.

3. A flaky material as claimed in Claim 1 or 2, which is further **characterized in that** the mean diameter of the fine particles is 3 to 100 nm.

4. A flaky material as claimed in Claim 1, 2 or 3, which is further **characterized in that** the thickness of the flaky material is 0.1 to 5 µm.

5. A flaky material as claimed in Claim 1, 2, 3 or 4, which is further **characterized in that** a metal is coated on an outer surface of the flaky material of which flatness degree is equal to or lower than 0.5 µm.

6. A method of producing the flaky material as claimed in Claim 1, 2, 3, 4 or 5, which is **characterized by** comprising:
a coating process in which a colloidal solution having fine particles of an inorganic oxide dispersed therein is coated on a base member, the fine particles having a mean diameter of 3 to 100 nm;
a drying process in which the coated colloidal solution is dried to produce an original body of the flaky material;
a peeling off process in which the original body of the flaky material is peeled off from the base member; and
a heating process in which the original body of the flaky material is heated,
wherein the colloidal solution has an effective (OH⁻) content of 3 x 10⁻⁵ to 1 x 10⁻⁶ mol/l.

7. A method of producing the flaky material as claimed in Claim 6, which is further **characterized in that** the content of the inorganic oxide in the colloidal solution is 1 to 50 mass%.

8. A method of producing the flaky material as claimed in Claim 6 or 7, which is further **characterized in that** the colloidal solution contains a surfactant.
